# Europäisches Patentamt

## European Patent Office

## Office européen des brevets

(11) Veröffentlichungsnummer: **0 239 741**
**B1**

(12) ## EUROPÄISCHE PATENTSCHRIFT

(45) Veröffentlichungstag der Patentschrift:
**10.08.88**

(51) Int. Cl.⁴: **F 16 L 3/22**

(21) Anmeldenummer: **87101327.2**

(22) Anmeldetag: **31.01.87**

(54) Doppelrohr, bestehend aus zwei einstückig über einen Steg miteinander verbundenen Schutzrohren.

(30) Priorität: **29.03.86 DE 3610667**

(43) Veröffentlichungstag der Anmeldung:
**07.10.87 Patentblatt 87/41**

(45) Bekanntmachung des Hinweises auf die Patenterteilung:
**10.08.88 Patentblatt 88/32**

(84) Benannte Vertragsstaaten:
**AT CH DE FR GB LI NL SE**

(56) Entgegenhaltungen:
**DE-C-1 218 574**
**FR-A-2 125 929**
**US-A-2 624 366**

(73) Patentinhaber: **Hegler, Wilhelm, Goethestrasse 2, D-8730 Bad Kissingen (DE)**

(72) Erfinder: **Hegler, Wilhelm, Goethestrasse 2, D-8730 Bad Kissingen (DE)**
Erfinder: **Hegler, Ralph- Peter, Dipl.- Ing., Goethestrasse 2, D-8730 Bad Kissingen (DE)**

(74) Vertreter: **Rau, Manfred, Dr. Dipl.- Ing., Rau & Schneck, Patentanwälte Königstrasse 2, D-8500 Nürnberg 1 (DE)**

## Beschreibung

Die Erfindung betrifft ein Doppelrohr nach dem ersten Teil des Anspruches 1.

Ein derartiges aus der DE-C-12 18 574 bekanntes Doppelrohr dient zur Elektroinstallation. Es wird durch Nageln befestigt, wobei der Nagel durch den Steg unter Erzeugung eines Loches hindurchgetrieben wird, und zwar in dem Bereich, der zwischen zwei einander gegenüberliegenden Wellentälern sich befindet. Die Gefahr ist hierbei sehr groß, daß der Steg reißt. Dies ist an sich bei dem erwähnten Einsatz des bekannten Doppelrohrs nicht von Bedeutung. Wenn aber ein solches Doppelrohr auch für sanitäre Zwecke eingesetzt werden soll, muß sichergestellt sein, daß es nicht bei der Verlegung beschädigt werden kann.

Aus der DE-C-20 38 991 ist es bekannt, ein als Wellrohr ausgebildetes Schutzrohr als gemeinsames Schutzrohr für eine Vorlaufleitung und eine Rücklaufleitung für zu bzw. von Heizkörpern zu führendes Heizwasser zu verwenden.

Weiterhin ist es bekannt, Schutzrohre aus Kunststoff mittels Schellen am Fußboden bzw. an Wänden zu befestigen, die elastische Rohre für sanitäre Zwecke, insbesondere Vor- und Rücklaufleitungen für Heizungen aufnehmen.

Der Erfindung liegt die Aufgabe zugrunde, ein Doppelrohr der gattungsgemäßen Art so auszugestalten, daß es in einfacher Weise verlegt werden kann, ohne daß die Gefahr von Beschädigungen oder Deformationen besteht und ohne daß seine Biegsamkeit in der durch die Achsen der beiden Schutzrohre gebildeten Hauptebene beeinträchtigt wird.

Diese Aufgabe wird erfindungsgemäß durch die Merkmale im kennzeichnenden Teil des Anspruches 1 gelöst. Durch die besondere Ausgestaltung des Befestigungsloches wird sichergestellt, daß beim Verlegen und der Befestigung des Doppelrohres mittels Schrauben oder auch mittels Nägeln ein Einreißen des Steges und damit auch eine Beschädigung mindestens eines Schutzrohres ausgeschlossen ist. Weiterhin wird durch die erfindungsgemäße Anordnung und Ausgestaltung des Befestigungsloches ermöglicht, dem die beiden Schutzrohre verbindenden Steg eine außerordentlich geringe Breite zu geben, so daß die Biegsamkeit des Doppelrohres in der durch die beiden Achsen der Schutzrohre aufgespannten Ebene außerordentlich günstig ist. Da das Befestigungsmittel, insbesondre also eine Schruabe, nicht unmittelbar gegen den Steg anliegt, und da die sekantenförmigen Begrenzungswände des Befestigungsloches in diesem Bereich den Schutzrohren eine hohe Scheitelfestigkeit geben, sind Deformationen des Rohres bei der Verlegung und Befestigung ausgeschlossen. Aus diesem Grunde ist das erfindungsgemäße Doppelrohr auch in besonders vorteilhafter Weise für sanitäre Zwecke einsetzbar, wobei in dem jeweiligen Schutzrohr noch ein zusätzliches biegsames Rohr vorgesehen wird.

Der Anspruch 2 gibt eine besonders günstige und platzsparende Ausgestaltung des Doppelrohres im Bereich des Befestigungsloches wieder. Anspruch 3 gibt eine optimale Breite für den Steg an, d.h. eine Optimierung der Biegsamkeit des Doppelrohres. Die Weiterbildung nach Anspruch 4 führt zu einer besonders bevorzugten Anwendung. Gerade durch die Ausgestaltung als Doppelrohr wird dieses in Längsrichtung sehr steif. Dies führt zu einer Erleichterung beim Einschieben des Innenerohres im Vergleich zu einfachen Schutzrohren, Die relativ hohe Steifigkeit reduziert auch die Gefahr, daß bei der Verlegung auf der Baustelle eine seitliche Auslenkung erfolgt, wenn ein Arbeiter über das Rohr stolpert.

Die weiteren Maßnahmen nach den Ansprüchen 5 und 6 verbessern noch die Eigenschaft des Doppelrohres, beim Verlegen nicht deformierbar zu sein.

Weitere Vorteile und Merkmale der Erfindung ergeben sich aus der nachfolgenden Beschreibung eines Ausführungsbeispiels anhand der Zeichnung. Es zeigt

Fig. 1    ein Doppelrohr gemäß der Erfindung in Draufsicht auf einen Abschnitt eines erfindungsgmäßen Doppelrohres in teilweise verlegtem Zustand,

Fig. 2    einen Querschnitt durch das Doppelrohr entsprechend der Schnittlinie II -II in Fig. 1, in vergrößertem Maßstab,

Fig. 3    einen weiteren Querschnitt durch das Doppelrohr entsprechend der Schnittlinie III -III in Fig. 1, ebenfalls in vergrößertem Maßstab,

Fig. 4    einen Teilquerschnitt durch das Doppelrohr entspreched der versetzten Schnittlinie IV -IV in Fig. 1, in noch stärker vergrößertem Maßstab,

Fig. 5    eine Stirnansicht eines Befestigungsstückes entsprechend dem Sichtpfeil V in Fig. 6,

Fig. 6    eine Seiten-Längs-Ansicht des Befestigungsstückes entsprechend dem Sichtpfeil VI in Fig. 5 und

Fig. 7    einen Grundriß eines Hauses mit in diesem verlegten Doppelrohren nach der Erfindung.

Das in der Zeichnung dargestellte Doppelrohr besteht aus zwei Schutzrohren 1, 2, die als sogenannte Wellrohre ausgebildet sind, d.h. sie weisen jeweils kreisringzylindrische Abschnitte 3 auf, deren Außendurchmesser D den größten Außendurchmesser jedes Schutzrohres 1 bzw. 2 bestimmt. Zwischen jeweils zwei benachbarten derartigen Abschnitten 3, die auch als Wellenberge bezeichnet werden können, sind als Wellentäler zu bezeichnende Abschnitte geringeren Außendurchmessers d ausgebildet. Die beiden Schutzrohre 1, 2 sind mittels eines Steges 5 einstückig miteinander verbunden, der in der Ebene angeordnet ist, die durch die beiden zueinander parallelen Achsen 6, 7 der beiden Schutzrohre 1, 2 aufgespannt wird. Derartige Doppelrohre sind in ihrem Grundaufbau, soweit er bisher geschildert wurde, beispielsweise aus der DE-C-12 18 574 bekannt und als Schutzrohre für Elektroinstallationen handelsüblich.

In den beiden Schutzrohren 1, 2 sind zwei gesondert angebrachte Innenrohre angeordnet, von denen eines als Vorlaufleitung 8 und eines als Rücklaufleitung 9 dient, und zwar dient die Vorlaufleitung 8 zur Zuführung von warmem bzw. heißem Wasser zu einem Heizkörper und die Rücklaufleitung 9 zur Abführung des im Heizkörper abgekühlten Wassers.

Die Vorlaufleitung 8 und die Rücklaufleitung 9 bestehen aus einerseits thermisch ausreichend stabilem und andererseits ausreichend flexiblem Kunststoff, damit Krümmungen ohne weiteres möglich sind.

Das Doppelrohr wird mit bereits in das Schutzrohr 1 eingezogener Vorlaufleitung 8 und in das Schutzrohr 2 eingezogener Rücklaufleitung 9 verlegt, und zwar auf dem Fußboden 10 oder aber auch an der Wand eines Hauses. Zur Befestigung auf dem Fußboden 10 bzw. an der Wand sind im Abstand voneinander jeweils zwischen zwei einander gegenüberliegenden kreisringzylindrischen Abschnitten 3, also zwischen den einander gegenüberliegenden Wellenbergen der beiden Schutzrohre 1, 2 Befestigungslöcher 11 ausgebildet. Ein solches Befestigungsloch 11 durchdringt zum einen den Steg 5 und ist - wie bereits erwähnt - jeweils im Bereich zweier Wellenberge 3 ausgebildet. Jedes Befestigungsloch 11 wird auf seiten der beiden Schutzrohre 1, 2 dadurch begrenzt, daß der zugeordnete kreiszylindrische Abschnitt 3, also der zugeordnete Wellenberg nach Art einer Sekante verläuft, so daß diese sekantenförmige Begrenzungswand 12 in der Höhe des Steges 5 etwa tangential zum das Wellental bildenden Abschnitt 4 verläuft. Daraus ergibt sich, daß für den Durchmesser a des Befestigungsloches folgende Beziehung gilt:

$$a \leqslant s + D\text{-}d$$
wobei
s = Breite des Steges 5 zwischen zwei benachbarten Wellenbergen der Schutzrohre 1 und 2 ist.

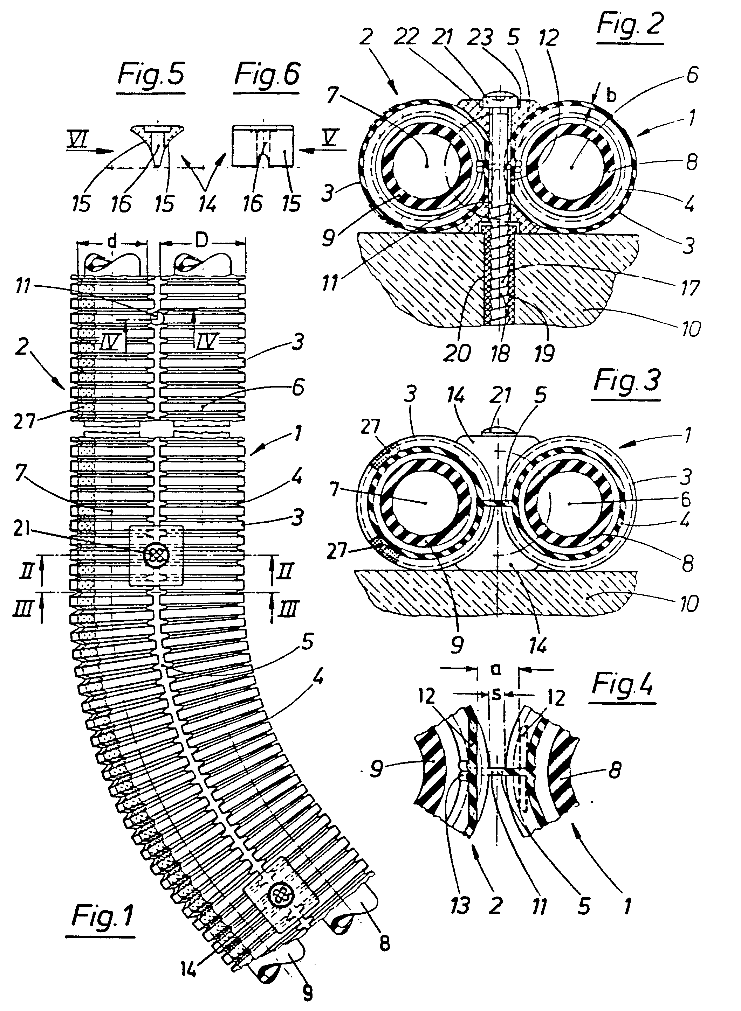

Wie insbesondere aus Fig. 4 hervorgeht, ist die jeweilige sekantenförmig verlaufende Begrenzungswand 12 so angeordnet, daß sie im Bereich des Steges 5 um die Wandstärke b des Schutzrohres 1 bzw. 2 gegenüber dem Abschnitt 4 (Wellental) radial nach außen versetzt ist. In diesem Fall gilt für den Durchmesser a des Befestigungsloches 11:

$$a = s + D\text{-}d\text{-}2b$$
Für die Stegbreite s des Steges 5 gilt im übrigen

$$b \leqslant s \leqslant 2b$$
Im übrigen gilt für die Beziehung von d und D:

$$d \cong = 0{,}8D$$
Für einen konkreten Anwendungsfall gilt:

$$D = 25 \text{ mm}$$
$$d = 20 \text{ mm}$$
$$b = 0{,}5 \text{ mm}$$
$$s = 0{,}8 \text{ mm}$$
$$a = 4{,}8 \text{ mm}$$

Das geschilderte Doppelrohr wird einstückig nach dem sogenannten Vakuumverfahren zwischen umlaufenden, eine sich fortbewegende Form bildenden, zu endlosen Ketten verbundenen Kokillen hergestellt. Diese verbreitete Technik ist beispielsweise aus der DE-C-20 61 027 (entsprechend US-A-3 776 679) bekannt.

Durch die Art der Herstellung entsteht im Übergangsbereich zwischen Steg 5 und Schutzrohr 1 und Schutzrohr 2 an dessen jeweiliger Innenseite ein Wulst 13 nach Art einer Schweißnaht, d.h. eine geringfügige Werkstoffanhäufung. Um diesen Wulst 13 im Bereich der sekantenförmigen Begrenzungswände nicht zu stark nach innen in das jeweilige Schutzrohr 1 bzw. 2 vorstehen zu lassen, ist die Begrenzungswand 12 in der geschilderten Weise um eine Wandstärke b radial gegenüber dem Abschnitt 4 nach außen versetzt. Außerdem kann aufgrund der genannten Herstellungsart zur leichteren Entformung des Doppelrohres nach der Herstellung die Begrenzungswand 12 jeweils ausgehend vom Steg 5 geringfügig nach außen zum Innenraum des jeweiligen Schutzrohres 1 bzw. 2 hin geneigt sein.

Um eine Deformation der Schutzrohre 1, 2 beim Befestigen auf dem Fußboden 10 oder an einer Wand zu verhindern, werden Befestigungsstücke 14 eingesetzt, wie sie in den Fig. 5 und 6 dargestellt sind. Derartige Befestigungsstücke füllen den jeweiligen Zwickelbereich zwischen den Schutzrohren 1 und 2 beiderseits des Steges 5. Wie Fig. 5 erkennen läßt liegen die beiden zylinderabschnittförmigen Seitenflächen 15 jedes Befestigungsstücks 14 gegen die beiden einander gegenüberliegenden Abschnitte 3 an. Eine Bohrung 16 im jeweiligen Befestigungsstück 14 fluchtet mit dem Befestigungsloch 11 im Doppelrohr, so daß eine Befestigungsschraube 17 von oben her die Bohrung 16 eines oberen Befestigungsstückes 14, das Befestigungsloch 11 und die Bohrung 16 in einem unteren Befestigungsstück 14 durchsetzt, bevor sie mit ihrem Gewindeteil 18 in einen Dübel 19 in einer entsprechenden Bohrung 20 im Fußboden 10 bzw. einer Wand eindringen. Zur Aufnahme des Kopfes 21 der Befestigungsschraube 17 ist jeweils in der Außenfläche 22 jedes Befestigungsstückes 14 eine mit der Bohrung 16 koaxiale Senkausnehmung 23 ausgebildet. Wie insbesondere die Fig. 2 und 3 erkennen lassen, verläuft die jeweilige Außenfläche 22 jedes Befestigungsstückes tangential zu den beiden Schutzrohren 1, 2 und demzufolge etwa parallel zu der durch die Achsen 6, 7 der Schutzrohre 1, 2 aufgespannten Ebene. Aus diesem Grunde wird der beim Festschrauben der Befestigungsschraube 17 über das dem Kopf 21 zugeordnete Befestigungsstück 14 aufgebrachte Druck wesentlich über das dem Fußboden 10 bzw. der Wand zugeordnete Befestigungsstück 14 auf den Fußboden 10 bzw. die Wand übertragen.

Diese Maßnahmen, Deformationen der Schutzrohre 1, 2 zu verhindern, dienen dazu, einen Austausch der als Vorlaufleitung 8 bzw. als Rücklaufleitung 9 dienenden Rohre auch bei montiertem Doppelrohr vorzunehmen. Wenn eines der Schutzrohre 1, 2 bei der Befestigung deformiert würde, wäre ein solcher Austausch nicht mehr möglich.

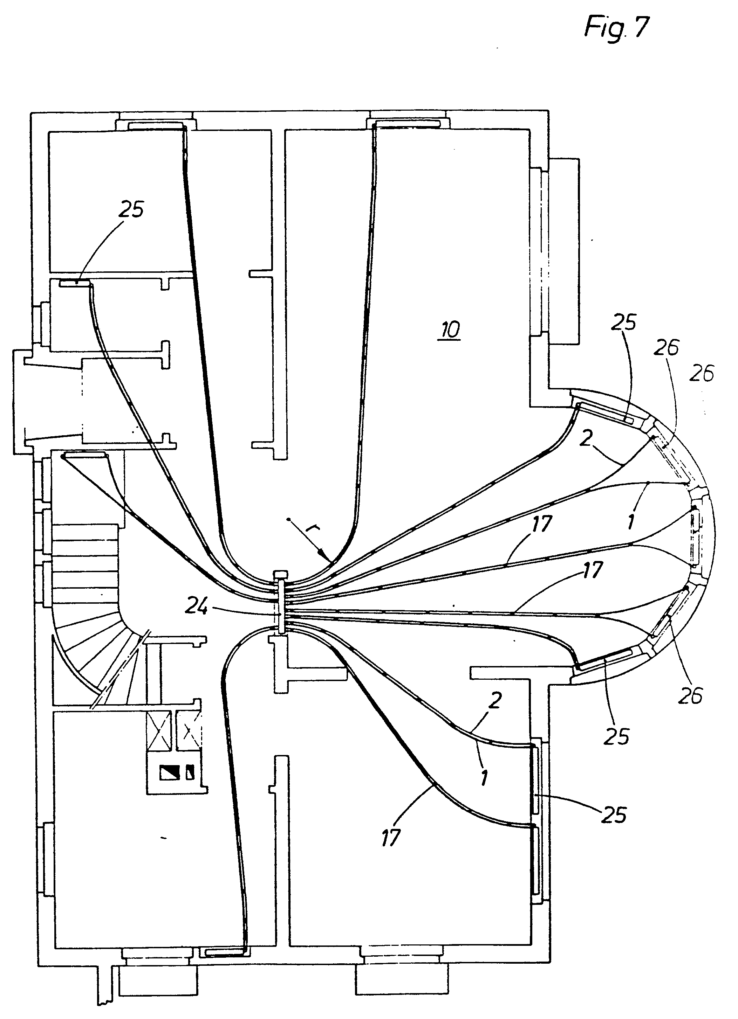

Wie aus Fig. 7 hervorgeht, sind mehrere Doppelrohre jeweils ausgehend von einer zentralen Verteileinrichtung 24 auf dem Fußboden 10 eines Hauses zu einzelnen Heizkörpern 25, 26 verlegt. Bei den Heizkörpern 25, bei denen die Vorlaufleitung 8 und die Rücklaufleitung 9 auf einer Seite des Heizkörpers 25 angeschlossen werden, wird das Doppelrohr bis an den Heizkörper 25 heranverlegt, ohne daß die beiden Schutzrohre 1, 2 nach Durchtrennung des Steges 5 auseinandergezogen werden. Eine solche Durchtrennung des Steges 5 und eine entsprechende Auffächerung der Schutzrohre 1, 2 erfolgt dagegen bei den Heizkörpern 26, bei denen die Vorlaufleitung 8 auf der einen Seite und die Rücklaufleitung 9 auf der anderen Seite des Heizkörpers 26 angeschlossen wird.

Da einerseits der Steg 5 entsprechend der obigen Darstellung eine sehr geringe Breite s hat und da darüber hinaus das Doppelrohr aus einem verhältnismäßig biegsamen Kunststoff, wie beispielsweise Polyäthylen, besteht, kann das Doppelrohr, ohne daß der Steg 5 durchtrennt würde, mit sehr engen Krümmungsradien verlegt werden. Für den oben erwähnten konkreten Anwendungsfall gilt für den Krümmungsradius r in der durch die beiden Achsen 6, 7 aufgespannten Ebene r≅150 mm. Für den in der Zeichnung nicht dargestellten Fall, wo das Doppelrohr ausgehend von einer Verlegung auf einem Fußboden 10 an einer Wand hochgezogen wird, gilt hier ein Krümmungsradius von etwa 50 mm. In diesem Fall ist also die Biegung senkrecht zu der durch die Achsen 6, 7 aufgespannten Ebene erfolgt, was zu der erwähnten Reduktion des Krümmungsradius führt.

Da das Doppelrohr einstückig hergestellt ist, können im Grundsatz die Schutzrohre 1, 2 nicht in unterschiedlichen Farben ausgebildet werden, was an sich bei solchen Rohren für sanitäre Anwendungen üblich ist. Aus diesem Grunde kann ein Rohr mit ein oder mehreren Farbstreifen 27 versehen sein, die z. B. auf blauen Rohren rot oder auf roten Rohren blau sind. Diese Farbstreifen 27 dienen als Montageerleichterung.

**Patentansprüche**

1. Doppelrohr, bestehend aus zwei einstückig über einen Steg (5) miteinander verbundenen, aus Kunststoff bestehenden, biegsamen Schutzrohren (1, 2), die als Wellrohre mit Wellenberge bildenden kreisringzylindrischen Abschnitten (3) größeren Außendurchmessers (D) ausgebildet sind, wobei die einander benachbarten kreisringzylindrischen Abschnitte (3) eines Schutzrohres (1 bzw. 2) jeweils über Wellentäler bildende Abschnitte (4) geringeren Durchmessers (d) miteinander verbunden sind, und wobei die kreisringzylindrischen Abschnitte (3) der beiden Schutzrohre (1, 2) einander jeweils paarweise gegenüberliegen, dadurch gekennzeichnet, daß im Steg (5) Befestigungslöcher (11) für Befestigungsschrauben (17) od.dgl. ausgebildet sind, die jeweils zwischen zwei einander paarweise gegenüberliegenden kreisringzylindrischen Abschnitten (3) größeren Außendurchmessers (D) der beiden Schutzrohre (1, 2) angeordnet sind, und daß die kreisringzylindrischen Abschnitte (3) im Bereich des jeweiligen Befestigungsloches (11) zu sekantenförmigen Begrenzungswänden (12) des jeweiligen Befestigungsloches (11) verformt sind.

2. Doppelrohr nach Anspruch 1, dadurch gekennzeichnet, daß die sekantenförmigen Begrenzungswände (12) jedes Befestigungsloches (11) etwa tangential zu den Abschnitten (4) geringeren Durchmessers (d) verlaufen.

3. Doppelrohr nach Anspruch 1, dadurch gekennzeichnet, daß für die Breite (s) des Steges (5) im Bereich der einander paarweise gegenüberliegenden kreisringzylindrischen Abschnitte (3) großen Durchmessers (D) gilt b ⩽ s ⩽ 2b, wobei b die Wandstärke des jeweiligen Schutzrohres (1, 2) ist.

4. Doppelrohr nach Anspruch 1, dadurch gekennzeichnet, daß in jedem Schutzrohr (1, 2) ein Rohr (Vorlaufleitung 8, Rücklaufleitung 9) für sanitäre Zwecke angeordnet ist.

5. Doppelrohr nach Anspruch 1, dadurch gekennzeichnet, daß beiderseits des Steges (5) anzuordnende Befestigungsstücke (14) vorgesehen sind, deren Seitenflächen (15) den zugeordneten Bereichen der kreisringzylindrischen Abschnitte (3) der Schutzrohre (1, 2) angepaßt sind.

6. Doppelrohr nach Anspruch 5, dadurch gekennzeichnet, daß die Außenfläche (22) des jeweiligen Befestigungsstücks (14) tangential zu beiden Schutzrohren (1, 2) verläuft.

**Claims**

1. A double tube consisting of two flexible protecting tubes (1, 2) made of plastic, joined together as one unit by means of a web (5) which are constructed as corrugated tubes with circular cylindrical portions (3) of greater outer diameter (D) constituting corrugation peaks, the mutually adjoining circular cylindrical portions (3) of a protecting tube (1 or 2) being joined together in each instance by means of portions (4) of smaller diameter (d) constituting corrugation troughs, and the circular cylindrical portions (3) of the two protecting tubes (1, 2) lying pairwise opposite to each other, characterised in that in the web (5) securing holes (11) are provided for securing screws (17) or the like which are disposed in each case between two circular cylindrical portions (3) of greater outer diameter (D) of the two protecting tubes (1, 2) lying pairwise opposite to each other, and in that the circular cylindrical portions (3) are shaped in the region of the respective securing hole (11) to form secant-shaped delimiting walls (12) of the respective securing hole (11).

2. A double tube according to Claim 1, characterised in that the secant-shaped delimiting walls (12) of each securing hole (11) extend substantially tangentially to the portions (4) of smaller diameter (d).

3. A double tube according to Claim 1, characterised in that the formula for the width (s) of the web (5) in the region of the circular cylindrical portions (3) of greater outer diameter (D) lying pairwise opposite each other is $b \leqslant s \leqslant 2b$, b being the wall thickness of the respective protecting tube (1, 2).

4. A double tube according to Claim 1, characterised in that in each protecting tube (1, 2) a tube (forward-flow duct 8, return-flow duct 9) for sanitary purposes is arranged.

5. A double tube according to Claim 1, characterised in that, on both sides of the web (5) securing members (14) to be used for fitting are provided, their side surfaces (15) being adapted to the associated regions of the circular cylindrical portions (3) of the protecting tubes (1, 2).

6. A double tube according to Claim 5, characterised in that the external surface (22) of the respective securing member (14) extends tangentially to the two protecting tubes (1, 2).

**Revendications**

1. Tuyau double constitué par deux tuyaux de protection (1, 2), réalisés dans une matière plastique et reliés entre eux d'un seul tenant par une nervure 5, qui se présentent sous forme de tuyaux ondulés, avec des sections cylindriques en forme d'anneaux de cercle (3) qui constituent des sommets d'ondulations (3) pourvus du plus grand diamètre extérieur (D), dont les sections (3) cylindriques en anneaux de cercle voisines d'un tuyau de protection (1 ou 2) sont respectivement reliées entre elles par des sections (4) de moindre diamètre (d) qui constituent des creux d'ondulations et dont les sections (3) cylindriques en anneaux de cercle des deux tuyaux de protection (1, 2) sont respectivement opposés par paires, caractérisé en ce que

il est constitué dans la nervure (5) des trous de fixation (11) pour des vis de fixation (17) ou pour d'autres moyens de fixation, qui sont disposés entre deux sections (3) cylindriques respectivement opposées par paires et pourvues du plus grand diamètre extérieur (D) des deux tuyaux de protection (1, 2) et en ce que les parties (3) cylindriques en anneaux de cercle subissent dans la région du trou de fixation (11) correspondant une déformation en forme de sécante des parois de délimitation (12) du trou de fixation (11) correspondant.

2. Tuyau double selon la revendication 1, caractérisé en ce que les parois de délimitation (12) en forme de sécante de chaque trou de fixation (11) sont orientées à peu près tangentiellement par rapport aux sections (4) de moindre diamètre (d).

3. Tuyau double selon la revendication 1, caractérisé en ce que la largeur (s) de la nervure (5) est, dans la région des sections cylindriques en anneaux de cercle (3) de grand diamètre (D) opposés par paires: $b \leqslant s \leqslant 2b$ où b représente l'épaisseur de paroi du tuyau de protection (1, 2) correspondant.

4. Tuyau double selon la revendication 1, caractérisé en ce qu'il est disposé dans chaque tuyau de protection (1, 2) un tuyau (conduite d'alimentation 8, conduite de retour 9) pour des usages sanitaires.

5. Tuyau double selon la revendication 1, caractérisé en ce qu'il est prévu des éléments de fixation (14) des deux côtés de la nervure (5) dont les faces latérales (15) sont adaptées aux parties en regard des sections cylindriques en anneaux de cercle (3) des tuyaux de protection (1, 2).

6. Tuyau double selon la revendication 5, caractérisé en ce que la face extérieure (22) de l'élément de fixation (14) s'étend tangentiellement par rapport aux deux tuyaux de protection (1, 2).

Fig. 5   Fig. 6

Fig. 2

Fig. 3

Fig. 4

Fig. 1

Fig. 7